# EUROPÄISCHE PATENTSCHRIFT

(11) **EP 1 464 904 B1**
(45) Veröffentlichungstag und Bekanntmachung des Hinweises auf die Patenterteilung: **31.05.2006**
(21) Anmeldenummer: 04006460.2
(22) Anmeldetag: 18.03.2004
(51) Int. Cl.: F27B 17/02

(54) **Schmelzvorrichtung mit einem Schmelztiegel**
Melting device with a crucible
Appareil de fusion avec un creuset

(30) Priorität: 19.03.2003 DE 20304445 U
(43) Veröffentlichungstag der Anmeldung: 06.10.2004
(73) Patentinhaber: Barget, Rudolf, 63549 Ronneburg (DE)
(72) Erfinder: Barget, Rudolf, 63549 Ronneburg (DE)
(74) Vertreter: Schumacher, Bernd

(56) Entgegenhaltungen:
- EP-A- 0 024 335
- AT-B- 312 562
- DE-A- 1 913 414
- DE-B- 1 237 237
- US-A- 3 626 154
- US-A- 3 862 397
- US-A- 4 208 573

## Beschreibung

Die Erfindung betrifft eine Schmelzvorrichtung mit einem Schmelztiegel aus Quarzglas und wenigstens einer auf diesen ausgerichteten Strahlungswärmequelle.

Üblicherweise ist bei einer solchen Schmelzvorrichtung, die beispielsweise in der Dentaltechnik oder bei der Elementaranalysetechnik eingesetzt werden kann, der Schmelztiegel von einer resistiven Strahlungswärmequelle in Form einer elektrischen Heizwendel umgeben, und das Schmelzgut wird dabei von langwelliger Infrarotstrahlung erhitzt. Der hierdurch erzeugte Schmelzvorgang dauert vergleichsweise lange und ist mit einem erheblichen Wärme- bzw. Energieverlust verbunden. Diese Vorrichtung ermöglicht kein schnelles Erhitzen auf sehr hohe Temperaturen. Auch führt ein Abschalten der Strahlungswärmequelle zu einer schnellen Abkühlung des Schmelzgutes.

US-A 4 208 573 offenbart einen Brennofen für dental-Keramische Arbeit mit einer Heizmuffel zum Erhitzen des Brenngutes auf Brenntemperatur der Keramischen Masse, gekennzeichnet durch eine Kurzwellige Infrarotstrahlen erzeugende Wärmeguelle.

Der vorliegenden Erfindung liegt die Aufgabe zugrunde, eine Schmelzvorrichtung der genannten Art, beispielsweise für die Dentaltechnik oder Elementaranalysetechnik, mit einfachen Maßnahmen so auszubilden, daß sich unter Vermeidung der geschilderten Nachteile auch hohe Schmelztemperaturen bei verbesserter Energieausbeute und reduziertem Wärmeverlust sehr schnell erzielen lassen.

Zur Lösung der gestellten Aufgabe zeichnet sich eine Schmelzvorrichtung der im Oberbegriff von Anspruch 1 genannten Art erfindungsgemäß durch die im Kennzeichen dieses Anspruchs aufgeführten Merkmale aus, nämlich dadurch, daß der Schmelztiegel von einem Isolierblock umgeben ist, daß in dem Isolierblock wenigstens ein zum Schmelztiegel führender Strahlungsschacht mit wenigstens einer darin befindlichen Strahlungswärmequelle angeordnet ist. Die Strahlungswärmequelle ist als kurzwelliger Quarz-Infrarotstrahler ausgebildet.

Mit einer solchen Schmelzvorrichtung lassen sich energiesparend sehr hohe Schmelztemperaturen äußerst schnell erzielen. Die kurzwellige Infrarotstrahlung des wenigstens einen Quarz-Infrarotstrahlers in dem wenigstens einen Strahlungsschacht des Isolierblocks gelangt durch diesen auf direktem Wege zum Schmelztiegel, so daß sich das Schmelzgut ohne bedeutsamen Energieverlust extrem schnell auf sehr hohe Temperaturen erhitzen läßt. Der Schmelzvorgang wird auch dadurch gefördert, daß durch den Isolierblock die Wärmeabstrahlung vom Schmelzgut deutlich reduziert ist.

Die besonders bevorzugte Weiterbildung von Anspruch 2 hat unter anderem den Vorteil, daß die gesamte Strahlung des länglichen Quarz-Infrarotstrahlers optimal ausgenutzt wird und daß die Wärme sofort allen Bereichen des länglichen Schmelztiegels zugeführt wird. Dabei hat sich die weitere Ausgestaltung gemäß Anspruch 3 bewährt, und diese Bauform ist besonders gut zu handhaben.

Gemäß der weiteren Ausgestaltung von Anspruch 4 sind aus praktischen und kostenmäßigen Erwägungen heraus drei gleichmäßig verteilte Strahlungsschächte vorteilhaft, um dem Schmelzgut die Wärme von drei Seiten zuzuführen. Grundsätzlich kann diese Anzahl auch vermindert oder erhöht werden. Eine Vergrößerung der Anzahl der Strahlungsschächte führt jedoch zu einem nicht unerheblichen gerätetechnischen Kostenanstieg und auch dazu, daß der Abstrahlungsverlust des Schmelzgutes bei abgeschalteten Quarz-Infrarotstrahlern wegen des reduzierten Isoliermaterials ansteigt, ohne daß eine bedeutende Verbesserung des Erhitzungsvorgangs vorliegt.

Die Maßnahme aus Anspruch 5 ermöglicht eine höhere, gleichmäßige Energieausbeute pro Strahlungsschacht.

Die Ansprüche 6 und 7 beinhalten eine sehr zweckmäßige Weiterbildung mittels einer geeigneten Kühlung, die es ermöglicht, daß die Strahlungsleistung heraufgesetzt wird, ohne die Einzelteile der Schmelzvorrichtung wärmetechnisch zu überlasten oder zu beschädigen.

Aus den Ansprüchen 8 bis 11 ergeben sich weitere die Handhabung und Temperaturregelung betreffende bautechnische Verbesserungen.

Die Merkmale der Ansprüche 12 und 13 verbessern die Strahlungsausbeute und reduzieren den abstrahlungstechnischen Energieverlust.

Der in Anspruch 14 genannte kurzwellige Infrarotbereich hat sich im praktischen Betrieb der Schmelzvorrichtung besonders bewährt.

Die Weiterbildung von Anspruch 15 verbessert die Qualität des Schmelzprozesses.

Die weitere Ausgestaltung von Anspruch 16 verbessert die Energieausbeute sowie den Erhitzungsvorgang durch Konzentrierung der kurzwelligen Infrarotstrahlung auf das Schmelzgut. Diesem Ziel dienen auch die Merkmale von Anspruch 17, indem in dem Bereich zwischen den Strahlungsschächten auf den Isolierblock gelangende Infrarotstrahlung auf das Schmelzgut reflektiert wird.

Die Erfindung wird nachfolgend an einem zeichnerisch dargestellten Ausführungsbeispiel näher erläutert. Es zeigen:
- Fig.1: eine Schmelzvorrichtung nach der vorliegenden Erfindung in einem vereinfachten Längsschnitt und
- Fig. 2: die Schmelzvorrichtung aus Fig. 1 in einer vereinfachten Draufsicht.

Gemäß den Figuren weist eine allgemein mit 12 bezeichnete Schmelzvorrichtung einen im vorliegenden Ausführungsbeispiel zylindrischen Behälter 1 auf, bei dem es sich um einen Gießzylinder für Dental- oder Analysezwecke handeln kann. Im Zentrum des Behälters 1 befindet sich ein von oben einsetzbarer und nach oben herausnehmbarer länglicher, vertikal angeordneter Schmelztiegel 4 mit einem darin enthaltenen Schmelzgut 5, wie einer dentalen Schmelzlegierung.

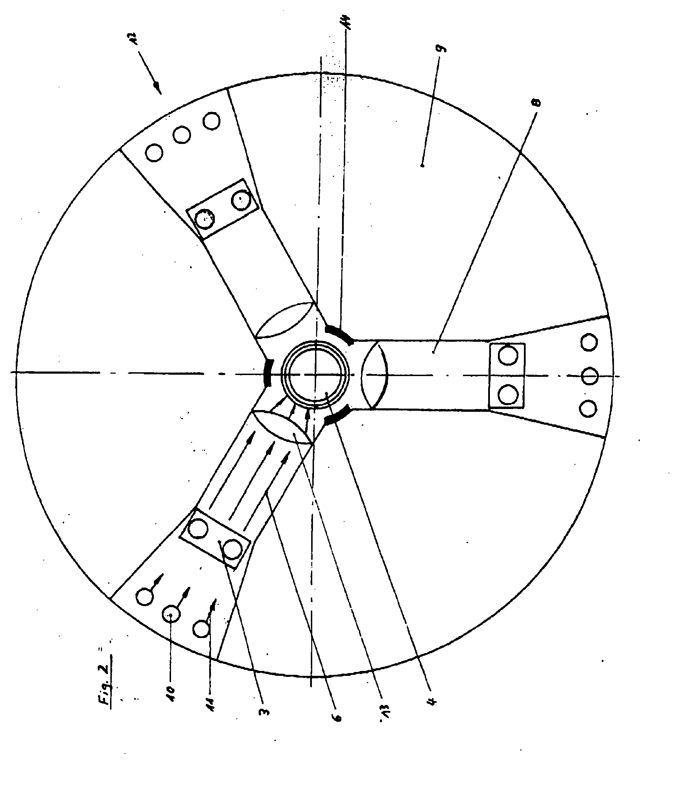

Der Schmelztiegel 4 ist zumindest seitlich und unten von einem Isolierblock 9 aus einem geeigneten Wärmeisoliermaterial umgeben. Gemäß Fig. 2 ist der Isolierblock im vorliegenden Fall mit drei über den Umfang gleichmäßig verteilten, radial verlaufenden und sich innen zu dem Schmelztiegel 4 öffnenden Strahlungsschächten 8 in Form von Einschnitten des Isoliermaterials ausgebildet. In jedem Strahlungsschacht 8 befinden sich im vorliegenden Fall zwei längliche, vertikal und in Umfangsrichtung versetzt angeordnete Quarz-Infrarotstrahler 3, die zu dem Schmelztiegel 4 gelangende kurzwellige Infrarotstrahlung 6 mit einer Wellenlänge von etwa 0,78µ bis etwa 1,4µ erzeugen.

Radial außerhalb der Quarz-Infrarotstrahler 3 befinden sich in den Strahlungsschächten 8 ferner Kühleinrichtungen 10, wie Druckluftquellen, die jeweils einen zentral gerichteten Kühlgasstrom 11 über die Quarz-Infrarotstrahler 3 leiten. Die Kühlgas- oder Kühlluftströme umspülen die Quarz-Infrarotstrahler 3, die Begrenzungen der Strahlungsschächte 8 sowie den Schmelztiegel 4 und verhindern somit ein übermäßiges Aufheizen dieser Teile.

Die relativ schmalen Strahlungsschächte 8 sind in Umfangsrichtung nur so breit und in vertikaler Richtung nur so hoch, daß sich die kurzwellige Infrarotstrahlung von den Quarz-Infrarotstrahlern 3 ungehindert bis zum Schmelztiegel 4 ausbreiten kann. Dadurch wird eine optimale Isolierwirkung des Isolierblocks 8 erzielt.

Gemäß Fig. 2 werden die Quarz-Infrarotstrahler 3 von radial außerhalb derselben befindlichen Haltern 2 getragen.

Die Strahlungsschächte 8 können im Betrieb an ihrer radialen Außenseite durch den Isolierblock 9 bzw. Teile desselben verschlossen sein, damit eine gute Wärmeisolation und ein ausschließlich radial nach innen gerichteter Kühlgasstrom sichergestellt werden.

Ein im vorliegenden Fall unten an den Schmelztiegel 4 angrenzendes Thermoelement 7 ermöglicht über einen entsprechenden Temperaturregelkreis ein geeignetes Einstellen und Regeln der Temperatur des Schmelzgutes 5.

In nicht dargestellter Weise können ferner Mittel vorgesehen sein, die ein geeignetes Formiergas in den heißen Schmelztiegel 4 einleiten. Dieses sorgt beim Verbrennen für eine Desoxidation des Schmelzgutes 5.

Ferner ist es möglich, den Quarz-Infrarotstrahlern 3 diese radial außen teilweise umschließende Spiegelrinnen zuzuordnen, durch die die zunächst auch nach außen gelangende Infrarotstrahlung 6 in Richtung zum Schmelztiegel 4 umgelenkt wird.

Mit dieser Schmelzvorrichtung 12 lassen sich auf besonders einfachem Wege sehr schnell äußerst hohe Temperaturen von beispielsweise 1600 Grad Celsius erzielen, um das Schmelzgut 5 schnell zum Schmelzen zu bringen, damit es gegossen werden kann. Es genügen normale elektrische Versorgungsnetze, geringe Leistungen und einfache trafofreie Mittel zum Betreiben der Quarz-Infrarotstrahler 3, während bei den herkömmlichen Schmelzvorrichtungen umfangreiche elektrische Bauteile, wie Trafos, HF Spulen etc., zum Erzeugen derart hoher Temperaturen erforderlich sind.

Gemäß den Figuren ist in den Strahlungsschächten 8 ferner jeweils eine Linse 13 angeordnet, die die kurzwellige Infrarotstrahlung 6 fokussieren und auf das Schmelzgut 5 konzentrieren. Das begünstigt die Energieausbeute und beschleunigt den Erhitzungsvorgang. Die Linsen können auch in den Schmelztiegel 4 integriert werden, indem die Wandung desselben an den Auftreffstellen der Infrarotstrahlung linsenförmig geformt ist.

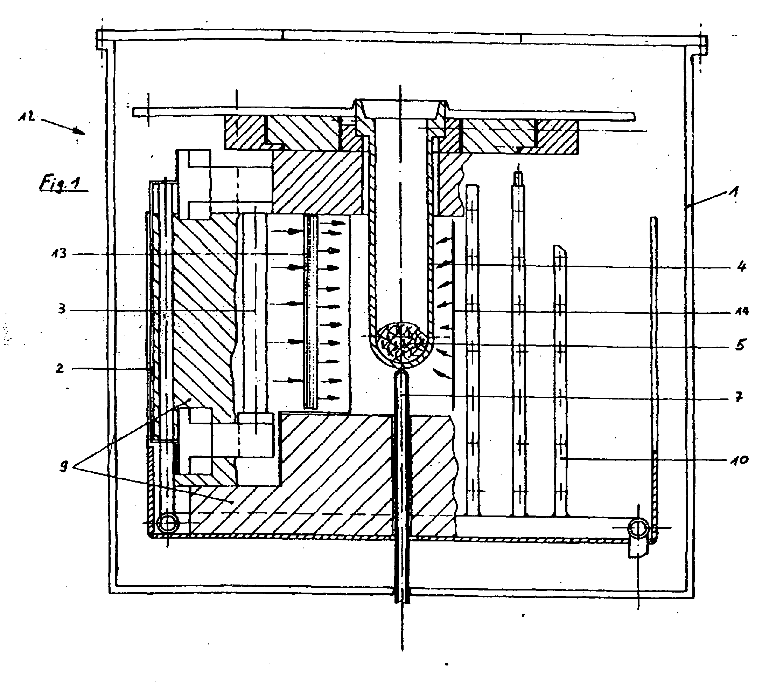

Ferner können die dem Schmelztiegel 4 benachbarten innenseitigen Oberflächen des Isolierblocks 9 in den Bereichen zwischen den Strahlungsschächten 8 mit Spiegeln 14 versehen sein, die die darauf gelangende Infrarotstrahlung zum Schmelzgut 5 reflektieren. Auch dadurch werden Energieverluste reduziert und der Erhitzungsvorgang beschleunigt. Diese Spiegel sind gemäß Darstellung in Fig. 2 in Umfangsrichtung gewölbt. Sie können zusätzlich auch an ihren vertikalen Endbereichen so gewölbt sein, daß die Infrarotstrahlung gemäß Fig. 1 dort etwas nach unten bzw. oben in Richtung zum Schmelzgut 5 umgelenkt wird. Alle diese Maßnahmen dienen dazu, die Infrarotstrahlung auf das Schmelzgut zu konzentrieren, Wärmeverluste und damit Geräteerwärmungen zu reduzieren und somit sehr schnell sehr hohe Temperaturen des Schmelzgutes 5 zu erzeugen.

## Patentansprüche

1. Schmelzvorrichtung mit einem Schmelztiegel aus Quarzglas und wenigstens einer auf diesen ausgerichteten Strahlungswärmequelle, wobei die Strahlungswärmequelle als kurzwelliger Quarz-Infrarotstrahler (3) ausgebildet ist,
**dadurch gekennzeichnet,**
**daß** der Schmelztiegel (4) von einem Isolierblock (9) umgeben ist,
**daß** in dem Isolierblock (9) wenigstens ein zum Schmelztiegel (4) führender Strahlungsschacht (8) mit wenigstens einer darin befindlichen Strahlungswärmequelle angeordnet ist.

2. Schmelzvorrichtung nach Anspruch 1, **dadurch gekennzeichnet, daß** der Schmelztiegel (4) und der Quarz-Infrarotstrahler (3) länglich ausgebildet und aufrecht stehend parallel zueinander angeordnet sind und daß der Strahlungsschacht (8) einen entsprechend länglichen, aufrecht stehenden Querschnitt aufweist..

3. Schmelzvorrichtung nach Anspruch 2, **dadurch gekennzeichnet, daß** der Isolierblock (9) zylindrisch ausgebildet ist, daß der längliche Schmelztiegel (3) und der Isolierblock (9) gleichachsig angeordnet sind und daß der Strahlungsschacht (8) in radialer Richtung des Isolierblocks (9) verläuft.

4. Schmelzvorrichtung nach einem der Ansprüche 1 bis 3, **dadurch gekennzeichnet, daß** dem Schmelztiegel (4) wenigstens drei in dessen Umfangsrichtung gleichmäßig verteilte Strahlungsschächte (8) mit jeweils wenigstens einem Quarz-Infrarotstrahler (3) zugeordnet sind.

5. Schmelzvorrichtung nach einem der Ansprüche 1 bis 4, **dadurch gekennzeichnet, daß** sich in jedem Strahlungsschacht (8) wenigstens zwei in Umfangsrichtung des Schmelztiegels (4) versetzt angeordnete Quarz-Infrarotstrahler (3) befinden.

6. Schmelzvorrichtung nach einem der Ansprüche 1 bis 5, **dadurch gekennzeichnet, daß** jeder Strahlungsschacht (8) mit einer insbesondere den in diesem befindlichen Quarz-Infrarotstrahler (3) durch einen erzwungenen Gas- oder Luftstrom (11) kühlenden Kühleinrichtung (10) ausgebildet ist.

7. Schmelzvorrichtung nach Anspruch 6, **dadurch gekennzeichnet, daß** die einen in dem Strahlungsschacht (8) nach innen gerichteten, über den Quarz-Infrarotstrahler (3) gelangenden Gas- oder Luftstrom (11) erzeugende Kühleinrichtung (10) außerhalb des Quarz-Infrarotstrahlers (3) angeordnet ist.

8. Schmelzvorrichtung nach einem der Ansprüche 1 bis 7, **dadurch gekennzeichnet, daß** der Isolierblock (9) in einem umgebenden Behälter (1), wie einem Gießzylinder, angeordnet ist.

9. Schmelzvorrichtung nach einem der Ansprüche 1 bis 8, **dadurch gekennzeichnet, daß** dem Schmelztiegel (4) ein in einen Temperaturregelkreis eingebundenes Thermoelement (7) zugeordnet ist.

10. Schmelzvorrichtung nach Anspruch 9, **dadurch gekennzeichnet, daß** das Thermoelement (7) unmittelbar unterhalb des Schmelztiegels (4) angeordnet ist.

11. Schmelzvorrichtung nach einem der Ansprüche 1 bis 10, **dadurch gekennzeichnet, daß** der Schmelztiegel (4) aus dem Isolierblock (9) oberseitig entnehmbar ist.

12. Schmelzvorrichtung nach einem der Ansprüche 1 bis 11, **dadurch gekennzeichnet, daß** jeder Quarz-Infrarotstrahler (3) mit einem diesen teilweise umgebenden und die Infrarotstrahlung zum Schmelztiegel (4) umlenkenden Strahlungsreflektor ausgebildet ist.

13. Schmelzvorrichtung nach einem der Ansprüche 1 bis 12, **dadurch gekennzeichnet, daß** jeder Strahlungsschacht (8) radial außerhalb des Quarz-Infrarotstrahlers (3) durch den Isolierblock (9) verschlossen ist.

14. Schmelzvorrichtung nach einem der Ansprüche 1 bis 13, **dadurch gekennzeichnet, daß** der Quarz-Infrarotstrahler (3) kurzwellige Infrarotstrahlung mit einer Wellenlänge im Bereich von etwa 0,78µ bis etwa 1,4µ erzeugt.

15. Schmelzvorrichtung nach einem der Ansprüche 1 bis 14, **gekennzeichnet durch** ein Mittel zum Einleiten von Formiergas in den Schmelztiegel (4).

16. Schmelzvorrichtung nach einem der Ansprüche 1 bis 15, **gekennzeichnet durch** wenigstens eine die kurzwellige Infrarotstrahlung (6) auf das Schmelzgut (5) fokussierende Linse (13).

17. Schmelzvorrichtung nach einem der Ansprüche 1 bis 16, **gekennzeichnet durch** kurzwellige Infrarotstrahlung zum Schmelzgut (5) reflektierende, dem Schmelztiegel (4) benachbart angeordnete Spiegel (14) zwischen den Strahlungsschächten (8).

## Claims

1. Melting device comprising a quartz glass crucible and at least one radiant heat source oriented toward said crucible, the radiant heat source being configured as a short-wave quartz infrared radiator (3), **characterised in that** the crucible (4) is surrounded by an insulating block (9), and **in that** at least one radiation shaft (8), which leads to the crucible (4) and has at least one radiant heat source located therein, is arranged in the insulating block (9).

2. Melting device according to claim 1, **characterised in that** the crucible (4) and the quartz infrared radiator (3) are elongate and arranged upright and parallel to each other, and **in that** the radiation shaft (8) has a correspondingly elongate, upright cross-section.

3. Melting device according to claim 2, **characterised in that** the insulating block (9) is cylindrical, **in that** the elongate crucible (3) and the insulating block (9) are arranged coaxially, and **in that** the radiation shaft (8) extends in the radial direction of the insulating block (9).

4. Melting device according to any one of claims 1 to 3, **characterised in that** at least three radiation shafts (8), which are distributed uniformly in the circumferential direction of the crucible and each have at least one quartz infrared radiator (3), are associated with the crucible (4).

5. Melting device according to any one of claims 1 to 4, **characterised in that** at least two quartz infrared radiators (3), which are arranged in an offset manner in the circumferential direction of the crucible (4), are located in each radiation shaft (8).

6. Melting device according to any one of claims 1 to 5, **characterised in that** each radiation shaft (8) has a cooling device (10), which cools, in particular, the quartz infrared radiator (3) located in said shaft by means of a forced gas current or air stream (11).

7. Melting device according to claim 6, **characterised in that** the cooling device (10), which generates a gas current or air stream (11), which enters the radiation shaft (8) in an inwardly directed manner via the quartz infrared radiator (3), is arranged outside the quartz infrared radiator (3).

8. Melting device according to any one of claims 1 to 7, **characterised in that** the insulting block (9) is arranged in a surrounding container (1) such as a cast cylinder.

9. Melting device according to any one of claims 1 to 8, **characterised in that** a thermal element (7), which is integrated into a temperature control circuit, is associated with the crucible (4).

10. Melting device according to claim 9, **characterised in that** the thermal element (7) is arranged immediately below the crucible (4).

11. Melting device according to any one of claims 1 to 10, **characterised in that** the crucible (4) may be removed from the top of the insulating block (9).

12. Melting device according to any one of claims 1 to 11, **characterised in that** each quartz infrared radiator (3) has a radiation renector, which partially surrounds said radiator and deflects the infrared radiation toward the crucible (4).

13. Melting device according to any one of claims 1 to 12, **characterised in that** each radiation shaft (8) is closed by the insulating block (9) radially externally to the quartz infrared radiator (3).

14. Melting device according to any one of claims 1 to 13, **characterised in that** the quartz infrared radiator (3) generates short-wave infrared radiation having a wavelength in the range from approximately 0.78 µ to approximately 1.4 µ.

15. Melting device according to any one of claims 1 to 14, **characterised by** a means for introducing forming gas into the crucible (4).

16. Melting device according to any one of claims 1 to 15, **characterised by** at least one lens (13), which focuses the short-wave infrared radiation (6) onto the material (5) to be melted.

17. Melting deace according to any one of claims 1 to 16, **characterised by** mirrors (14), which are arranged adjacent to the crucible (4) and reflect short-wave infrared radiation toward the product (5) to be melted, between the radiation shafts (8).

## Revendications

1. Dispositif de fusion comprenant un creuset en verre de quartz et au moins une source de chaleur rayonnante dirigée vers celui-ci,
la source de chaleur rayonnante étant conçue comme un émetteur d'infrarouges à quartz de faible longueur d'onde (3),
**caractérisé en ce que** le creuset (4) est entouré par un bloc isolant (9),
**en ce qu'**au moins un puits de rayonnement (8) menant au creuset (4), comprenant au moins une source de chaleur rayonnante située à l'intérieur de celui-ci, est disposé dans le bloc isolant (9).

2. Dispositif de fusion selon la revendication 1, **caractérisé en ce que** le creuset (4) et l'émetteur d'infrarouges à quartz (3) sont conçus de façon longitudinale et sont disposés verticalement parallèlement l'un à l'autre et **en ce que** le puits de rayonnement (8) comprend une section transversale longitudinale correspondante, disposée verticalement.

3. Dispositif de fusion selon la revendication 2, **caractérisé en ce que** le bloc isolant (9) est conçu de façon cylindrique, **en ce que** le creuset longitudinal (3) et le bloc isolant (9) sont disposés de manière équiaxe et **en ce que** le puits de rayonnement (8) s'étend dans la direction radiale du bloc isolant (9).

4. Dispositif de fusion selon l'une quelconque des revendications 1 à 3, **caractérisé en ce qu'**au moins trois puits de rayonnement (8) répartis régulièrement dans la direction périphérique du creuset, dotés respectivement d'au moins un émetteur d'infrarouges à quartz (3), sont associés au creuset (4).

5. Dispositif de fusion selon l'une quelconque des revendications 1 à 4, **caractérisé en ce qu'**au moins deux émetteurs d'infrarouge à quartz (3) disposés en décalage dans la direction périphérique du creuset (4) se situent dans chaque puits de rayonnement (8).

6. Dispositif de fusion selon l'une quelconque des revendications 1 à 5, **caractérisé en ce que** chaque puits de rayonnement (8) est conçu avec un système de refroidissement (10) refroidissant en particulier l'émetteur d'infrarouges à quartz (3) situé dans celui-ci par un courant de gaz ou d'air (11) obtenu de force.

7. Dispositif de fusion selon la revendication 6, **caractérisé en ce que** le système de refroidissement (10) générant un courant de gaz ou d'air (11) orienté vers l'intérieur dans le puits de rayonnement (8), parvenant au-dessus de l'émetteur d'infrarouges à quartz (3), est disposé à l'extérieur de l'émetteur d'infrarouges à quartz (3).

8. Dispositif de fusion selon l'une quelconque des revendications 1 à 7, **caractérisé en ce que** le bloc isolant (9) est disposé dans un récipient circulaire (1), comme un cylindre de coulée.

9. Dispositif de fusion selon l'une quelconque des revendications 1 à 8, **caractérisé en ce qu'**un thermocouple (7) incorporé dans un circuit de régulation de la température est associé au creuset (4).

10. Dispositif de fusion selon la revendication 9, **caractérisé en ce que** le thermocouple (7) est disposé directement au-dessous du creuset (4).

11. Dispositif de fusion selon l'une quelconque des revendications 1 à 10, **caractérisé en ce que** le creuset (4) peut être prélevé côté supérieur du bloc isolant (9).

12. Dispositif de fusion selon l'une quelconque des revendications 1 à 11, **caractérisé en ce que** chaque émetteur d'infrarouges à quartz (3) est conçu avec un réflecteur de rayonnement entourant en partie celui-ci et renvoyant le rayonnement infrarouge en direction du creuset (4).

13. Dispositif de fusion selon l'une quelconque des revendications 1 à 12, **caractérisé en ce que** chaque puits de rayonnement (8) est fermé radialement à l'extérieur de l'émetteur d'infrarouges à quartz (3) par le bloc isolant (9).

14. Dispositif de fusion selon l'une quelconque des revendications 1 à 13, **caractérisé en ce que** l'émetteur d'infrarouges à quartz (3) génère un rayonnement infrarouge de faible longueur d'onde présentant une longueur d'onde dans la plage d'approximativement 0,78 µ à approximativement 1,4 µ.

15. Dispositif de fusion selon l'une quelconque des revendications 1 à 14, **caractérisé par** un moyen pour introduire un gaz d'activation dans le creuset (4).

16. Dispositif de fusion selon l'une quelconque des revendications 1 à 15, **caractérisé par** au moins une lentille (13) focalisant le rayonnement infrarouge de faible longueur d'onde (6) sur la matière à fondre (5).

17. Dispositif de fusion selon l'une quelconque des revendications 1 à 16, **caractérisé par** des miroirs (14) entre les puits de rayonnement (8), disposés au voisinage du creuset (4), réfléchissant le rayonnement infrarouge de faible longueur d'onde en direction de la matière à fondre (5).
